# EUROPEAN PATENT SPECIFICATION

(11) **EP 1 285 847 B1**
(45) Date of publication and mention of the grant of the patent: **28.11.2007**
(21) Application number: 02013760.0
(22) Date of filing: 20.06.2002
(51) Int. Cl.: B62J 6/04

(54) **Tail lamp structure for motorcycle**
Struktur einer Hinterradleuchte für ein Motorrad
Structure d'un appareil d'éclairage d'une motocyclette

(30) Priority: 21.08.2001 JP 2001250576
(43) Date of publication of application: 26.02.2003
(73) Proprietor: HONDA GIKEN KOGYO KABUSHIKI KAISHA, Tokyo (JP)
(72) Inventor: Ban, Tetsuo, Wako-shi, Saitama (JP); Shibata, Yumio, Wako-shi, Saitama (JP)
(74) Representative: Liska, Horst

(56) References cited:
- FR-A- 732 465
- PATENT ABSTRACTS OF JAPAN vol. 1996, no. 06, 28 June 1996 (1996-06-28) & JP 08 040329 A (SUZUKI MOTOR CORP), 13 February 1996 (1996-02-13)
- PATENT ABSTRACTS OF JAPAN vol. 018, no. 056 (M-1551), 28 January 1994 (1994-01-28) & JP 05 278655 A (SUZUKI MOTOR CORP), 26 October 1993 (1993-10-26)

## Description

The present invention relates to a motorcycle, and particularly to a tail lamp structure of the motorcycle.

Tail lamp structures for motorcycles have been disclosed, for example, in Japanese Patent Laid-open No. Hei 5-278655. The tail lamp structures of this type are configured such that a tail lamp that lights up for signifying the presence of the motorcycle to a vehicle running behind the motorcycle, and a brake lamp that lights up for signifying, at the time of braking operation of the motorcycle, the on-state of braking to a vehicle behind the motorcycle are made to light up by using a common bulb provided in one lamp cover.

Tail lamp structures for motorcycles of another type have been disclosed, for example, in Japanese Patent Laid-open No. Hei 8-40329. The tail lamp structures for motorcycles of this type are configured such that a tail lamp and a brake lamp are made to light up by using different bulbs, wherein the brake lamp is disposed on an upper portion of the tail lamp structure and the tail lamp is disposed under the brake lamp.

In the above two kinds of tail lamp structures, each of the tail lamp and the brake lamp is made to light up by using the bulb, and therefore, the size of the tail lamp structure becomes large. This gives a limit to a design of a tail lamp and its neighborhood located at a rear end portion of a rear cowl. Concretely, the enlargement of a tail lamp structure disposed inside a rear end portion of a rear cowl makes it difficult to realize a thin, light design of a tail lamp and its neighborhood located at the rear end portion of the rear cowl. In particular, the above-described tail lamp structure of the type, in which the tail lamp and the brake lamp are made to light up by using different bulbs, tends to give a fairly large limitation to above design of the tail lamp and its neighborhood.

To realize a tail lamp structure including a tail lamp and a brake lamp separately provided, wherein the thickness of each of the lamps in the vertical direction is made thin for miniaturizing the entire tail lamp structure, the present applicant has contrived to make each of a tail lamp and a brake lamp light up by using an array of a plurality of LEDs (Light Emitting Diodes). The use of such LEDs is effective to make each of the tail lamp and the brake lamp thin and consequently compact, and to realize a thin, light design of a tail lamp and its neighborhood located at a rear end portion of a rear cowl.

To further improve the above thin, light design of the tail lamp and its neighborhood, which lamp is made to light up by using the LEDs, the present applicant has contrived to form the rear end portion of the rear cowl into a shape whose lateral width becomes narrow as nearing to an upper end of the rear cowl. In this case, however, if the brake lamp is disposed on an upper portion of the tail lamp structure and the tail lamp is disposed under the brake lamp in accordance with the same manner as the above-described related art manner, there may occur a new problem that a lighting area of the brake lamp disposed on the upper side becomes deficient.

FR-A-732 465 discloses a tail lamp structure in which a tail lamp is positioned on an upper portion of the tail lamp structure and a brake lamp is disposed under said tail lamp.

Accordingly, an object of the present invention is to provide a tail lamp structure for a motorcycle, which is capable of sufficiently ensuring a lighting area of a brake lamp even if the tail lamp structure is disposed inside a rear end portion of a rear cowl, which portion has a shape whose lateral width becomes narrow as nearing to an upper end of the rear cowl.

This object is achieved by a tail lamp structure according to claim 1.

According to the present invention, there is provided a tail lamp structure for a motorcycle, which is disposed inside a rear end portion of a rear cowl (for example, a rear cowl 13 to be described in an embodiment), the rear end portion having a shape whose lateral width becomes narrow as nearing to an upper end of the rear cowl, wherein a tail lamp (for example, a tail lamp portion 47 to be described in the embodiment) is disposed on an upper portion of the tail lamp structure, and a brake lamp (for example, a brake lamp portion 48 to be described in the embodiment) is disposed under the tail lamp.

With this configuration, since the tail lamp is disposed on an upper portion of the tail lamp structure and the brake lamp is disposed under the tail lamp, even if the tail lamp structure is disposed inside the rear end portion of the rear cowl, which portion has a shape whose lateral width becomes narrow as nearing to an upper end of the rear cowl, it is possible to ensure a sufficient lighting area of the brake lamp.

Hereinafter, a tail lamp structure for a motorcycle according one embodiment of the present invention will be described with reference to the drawings, in which:
FIG. 1 is a side view showing a motorcycle to which a tail lamp structure for a motorcycle according to one embodiment of the present invention is applied.
FIG. 2 is a rear view showing the tail lamp structure for a motorcycle according to the embodiment of the present invention.
FIG. 3 is a side view showing the tail lamp structure for a motorcycle according to the embodiment of the present invention.
FIG. 4 is a plan view showing a rear cowl in which the tail lamp structure for a motorcycle according to the embodiment of the present invention is disposed.
FIG. 5 is a plan view showing a rear fender in which the tail lamp structure for a motorcycle according to the embodiment of the present invention is disposed.
FIG. 6 is a side view showing the rear fender in which the tail lamp structure for a motorcycle according to the embodiment of the present invention is disposed.
FIG. 7 is an exploded side view showing the rear fender in which the tail lamp structure for a motorcycle according to the embodiment of the present invention is disposed and another rear fender.
FIG. 8 is a plan view showing a rear winker mounted to the rear fender in which the tail lamp structure for a motorcycle according to the embodiment of the present invention is disposed.
FIG. 9 is a plan view of a rear reflector mounted to the rear fender in which the tail lamp structure for a motorcycle according to the embodiment of the present invention is disposed.
FIG. 10 is a partial sectional plan view showing a state that the rear fender in which the tail lamp structure for a motorcycle according to the embodiment of the present invention is disposed is connected to another rear fender by using the rear winkers and the rear reflector.
FIG. 11 is a side view showing a state that the rear fender in which the tail lamp structure for a motorcycle according to the embodiment of the present invention is disposed is fitted to another rear fender.

It is to be noted that in the following description, an orientation of each component from front to rear, from left to right, or the like, is based on the running direction of a vehicular body.

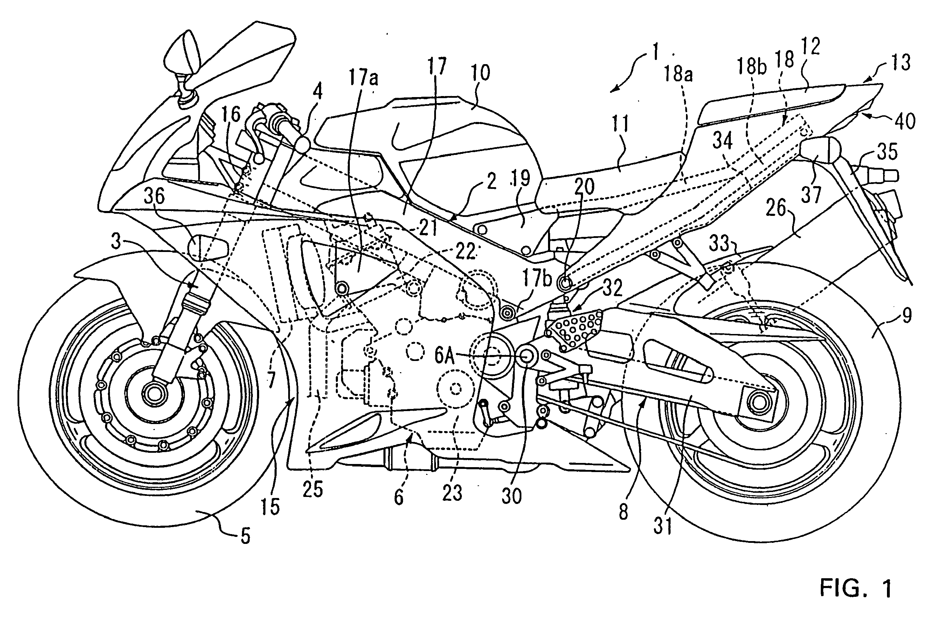

FIG. 1 is a side view showing an entire configuration of a motorcycle to which the tail lamp structure according to this embodiment is applied.

A motorcycle 1 includes, as shown in FIG. 1, a body frame 2. A pair of left and right front forked portions 3 are turnably supported by a front end portion of the body frame 2. A pair of left and right handlebars 4 for steering are mounted at upper ends of the front forked portions 3 in such a manner as to be located at an upper front portion of a vehicular body. A front wheel 5 is rotatably supported by the front forked portions 3. An engine 6 is supported by the body frame 2. A rear fork 8 is vertically swigably supported by a radiator 7 disposed in front of the engine 6, a rear end of the engine 6, and the body frame 2. A rear wheel 9 is rotatably supported by a rear end portion of the rear fork 8. A fuel tank 10 is disposed on an upper portion of the body frame 1. A main seat 11 for a driver and a pillion seat 12 for a passenger are disposed behind the fuel tank 10. The front portion of the vehicular body is nearly covered with a front cowl 15. In addition, the pillion seat 12 is disposed on a rear cowl 13 provided behind the driver's seat 11.

The body frame 2 includes a head pipe 16, a pair of left and right main frames 17, a pair of left and right connection plates 19, and a pair of left and right seat rails 18. The head pipe 16 is disposed at a front end of the body frame 2. The main frames 17 branched right and left from the head pipe 16 extend rearwardly, obliquely downwardly therefrom. A front side engine hanger 17a is integrally provided on a front portion of each of the main frames 17 in such a manner as to extend downwardly therefrom, and a rear side engine hanger 17b is integrally provided on a rear portion of the main frame 17 in such a manner as to extend downwardly. The connection plates 19 are connected to upper rear sides of the main frames 17. The seat rails 18 are connected to the main frames 17 and the connection plates 19 in such a manner as to extend rearwardly, obliquely upwardly. The seat rails 18 have a pair of left and right upper pipes 18a connected to the connection plates 19 and extending rearwardly, obliquely upwardly therefrom, and a pair of left and right lower pipes 18b connected to connecting portions 20 provided at rear ends of the main frames 17 and extending rearwardly, obliquely upwardly therefrom. Rear ends of the upper pipes 18a and the lower pipes 18b are welded to each other. A front end portion of the rear cowl 13 is connected to the connecting portions 20 of the main frames 17.

The engine 6 is a parallel multi-cylinder/four-cycle engine including a cylinder block 22 having a cylinder head 21 and a crankcase 23 provided under the cylinder block 22 in such a manner as to be continuous therefrom, wherein a plurality of cylinders are disposed in parallel in the lateral direction in the cylinder block 22. The engine 6 is supported by the body frame 2 in a state that the cylinder block 22 is slightly tilted forwardly. To support the engine 6, the cylinder block 22 is bolted on the front side engine hangers 17a of the main frames 17, and an upper portion of a rear end of the crankcase 23 is bolted on the rear side engine hangers 17b of the main frames 17.

Exhaust pipes 25 are connected to a front portion of the cylinder block 22 in such a manner as to be communicated to respective cylinders (only one exhaust pipe 25 is shown in FIG. 1). The plurality of exhaust pipes 25 extend downwardly from end portions thereof connected to the cylinder block 22. The exhaust pipes 25 are put in order under the engine 6, being bent to extend rearwardly along a back surface of the crankcase 23, and are collected, under a rear portion of the crankcase 23, into one collecting pipe 26. The collecting pipe 26 is disposed on the right side of the rear wheel 9 while being raised rightwardly, obliquely rearwardly.

The rear fork 8 has, at its front end, a base portion 30 from which a pair of left and right forked portions 31 extend rearwardly. The base portion 30 is pivotably supported by a pivot 6A provided at a rear end portion of the engine 6, whereby the rear fork 8 is vertically swingable around the pivot 6A. A rear cushion unit 32 for relieving and absorbing vibration applied from a road surface to the rear wheel 9 is interposed between the base portion 30 of the rear fork 8 and rear ends of the main frames 17. A rear fender 33 for covering an upper front portion of the rear wheel 9 is mounted to upper portions of the forked portions 31. A rear fender (first rear fender) 34 for covering an upper intermediate portion of the rear wheel 9 is mounted to a lower portion of the rear cowl 13. A rear fender (second rear fender) 35 for covering an upper rear portion of the rear wheel 9 is mounted to a rear portion of the rear fender 34.

A pair of left and right front winkers 36 are mounted to the front cowl 15, and a pair of left and right rear winkers 37 are mounted to a boundary portion between the rear fender 34 and the rear fender 35.

A tail lamp unit to which the tail lamp structure according to this embodiment is applied and a peripheral portion of the tail lamp unit will be described below.

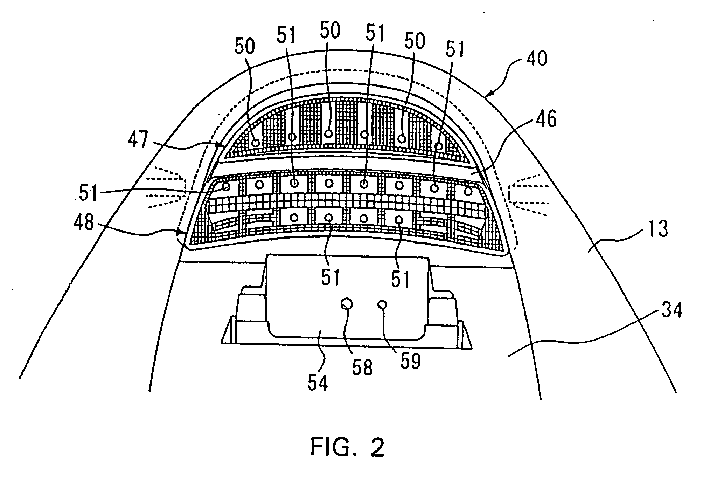

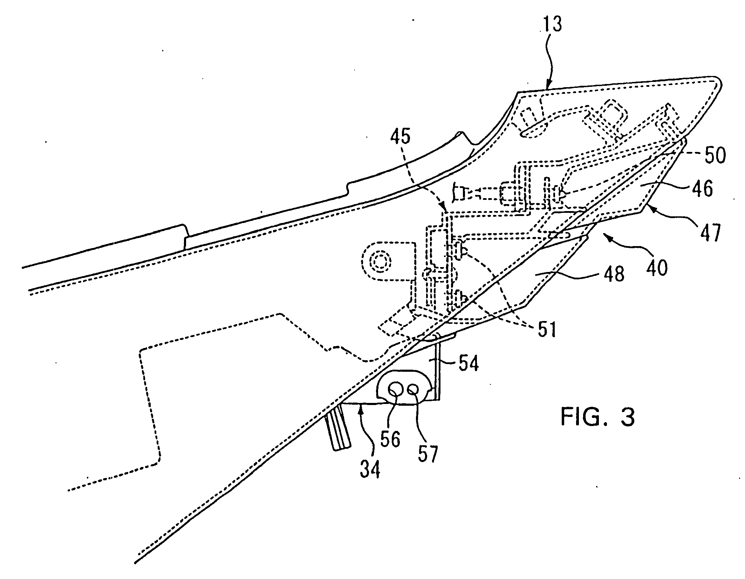

A tail lamp unit 40 according to this embodiment is, as shown in FIGS. 2 and 3, disposed inside a space surrounded by a rear end portion of the rear cowl 13 and a rear end portion of the rear fender 34 disposed under the rear cowl 13. The rear end portion of the rear cowl 13 is, as will be fully described below, formed into a shape having a lateral width becoming narrow as nearing to an upper side leading end of the rear cowl 13.

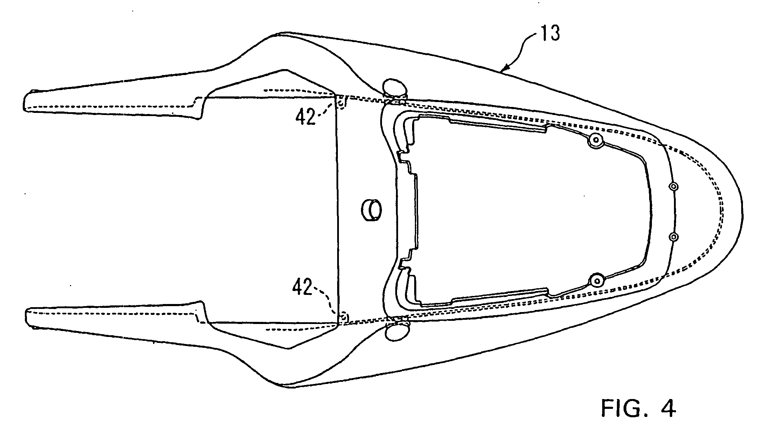

The rear end portion of the rear cowl 13, which covers the upper side of the tail lamp unit 40, has such a taper shape as described below. As seen from the rear side (see FIG. 2), the lateral width of the rear end portion of the rear cowl 13 becomes narrow as nearing to an upper side leading end of the rear cowl 13; as seen from the upper side (see FIG. 4), the lateral width of the rear end portion of the rear cowl 13 becomes narrow as nearing to a rear side leading end of the rear cowl 13; and as seen from the left or right side (see FIG. 3), the lateral width of the rear end portion of the rear cowl 13 becomes thin as nearing to a rear side leading end of the rear cowl 13. As shown in FIG. 4, the rear cowl 13 has two mounting portions 42 located on left and right sides of a longitudinally intermediate portion of the rear cowl 13.

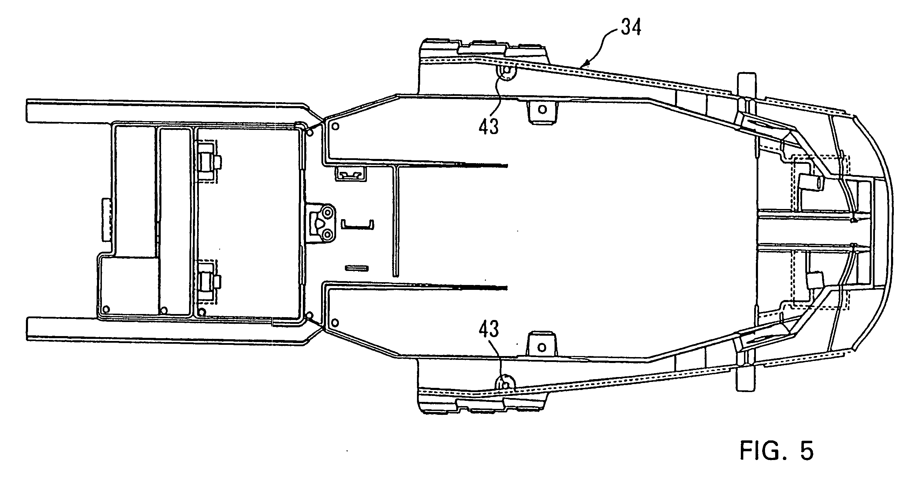

The rear end portion of the rear fender 34 covers, as shown in FIGS. 2 and 3, the lower side of the tail lamp unit 40. As seen from the upper side (see FIG. 5), the rear end portion of the rear fender 34 has a taper shape becoming thinner as becoming closer to a rear side leading end of the rear fender 34. As shown in FIG. 5, the rear fender 34 has two mounting portions 43 located on left and right sides of a longitudinally intermediate portion of the rear fender 34. In a state that the rear fender 34 is disposed under the rear cowl 13, the mounting portions 43 of the rear fender 34 are mounted to the mounting portions 42 of the rear cowl 13 by means of small screws or the like.

As shown in FIG. 3, the tail lamp unit 40, which is disposed in a space surrounded by the rear end portions of the rear cowl 13 and the rear fender 34, has a lamp holding portion 45 provided on a front portion and a lamp cover 46 mounted on a rear side of the lamp holding portion 45. The lamp cover 46 has a taper shape matched with the taper shape of the rear cowl 13. Concretely, as seen from the rear side (see FIG. 2), a lateral width of the lamp cover 46 becomes narrow as nearing to an upper side leading end of the lamp cover 46; and as seen from the left or right side (see FIG. 3), the lateral width of the lamp cover 46 becomes narrow as nearing to a rear side leading end of the lamp cover 46.

As shown in FIGS. 2 and 3, the lamp cover 46 is divided into an upper portion and a lower portion. A horizontally-elongated tail lamp portion 47 is disposed on the upper portion of the lamp cover 46, and a horizontally-elongated brake lamp portion 48 is disposed under the tail lamp portion 47. The tail lamp portion 47 lights up for signifying the presence of the motorcycle 1 to a vehicle running behind the motorcycle 1, and the brake lamp portion 48 lights up for signifying, at the time of braking operation of the motorcycle 1, the on-state of braking to a vehicle running behind the motorcycle 1.

The lamp holding portion 45 includes only one row of a plurality of LEDs (Light Emitting Diodes) 50 arrayed on the lateral direction. The LEDs 50, which are used for making the tail lamp portion 47 light up, are located in the tail lamp portion 47 provided on the upper portion of the lamp cover 46. The lamp holding portion 45 also includes a plurality of vertical rows each having a plurality of LEDs 51 arrayed on the lateral direction. The LEDs 51, which are used for making the brake lamp portion 48 light up, are located in the brake lamp portion 48 provided on the lower portion of the lamp cover 46.

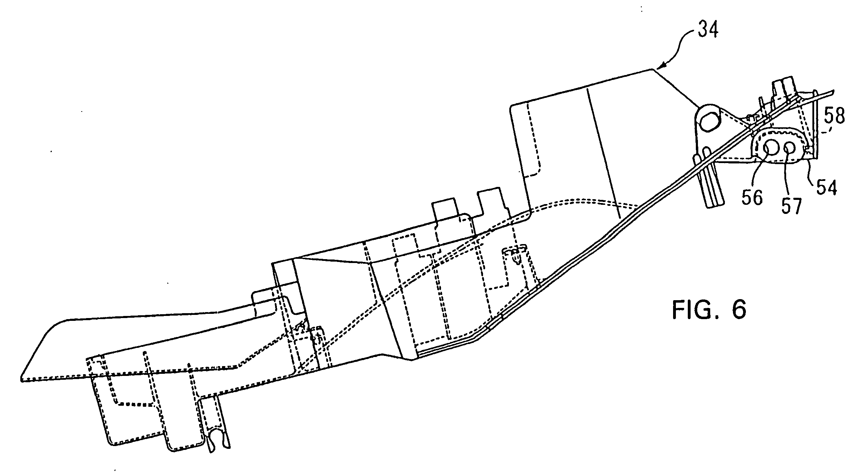

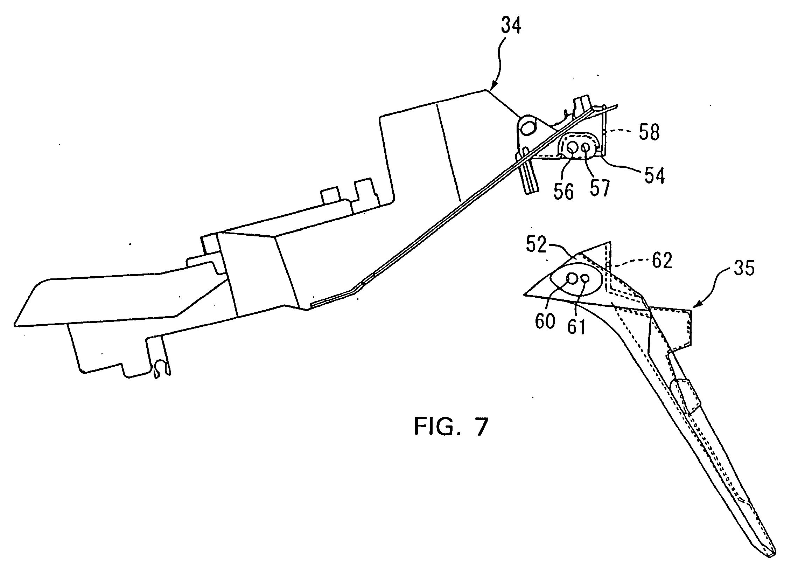

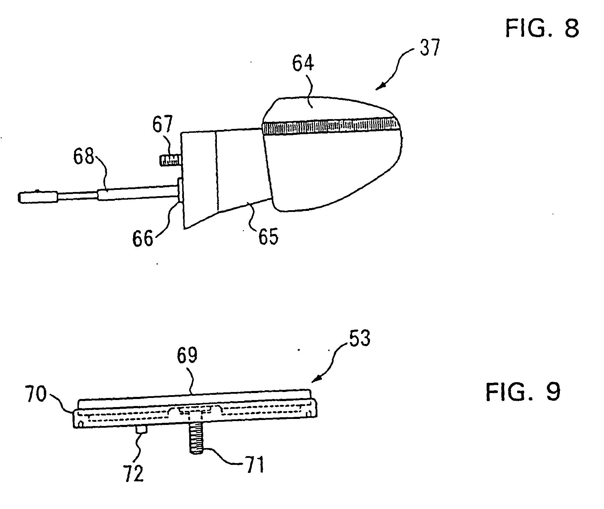

The rear fender 34 has, on the lower side of a rear end portion, a mounting portion 54. A mounting portion 52 of the rear fender 35 shown in FIG. 7, the left and right rear winkers 37 shown in FIG. 8, and a rear reflector 53 shown in FIG. 9 are mounted to the mounting portion 54 of the rear fender 34. As shown in FIGS. 6 and 7, the mounting portion 54 has a pair of left and right hole portions 56 passing through the mounting portion 54 in the lateral direction. The mounting portion 54 also has, at positions behind the hole portions 56, a pair of left and right hole portions 57 passing through the mounting portion 54 in the lateral direction, wherein the hole portions 57 have diameters smaller than those of the hole portions 56. As shown in FIG. 2, the mounting portion 54 further includes, at its rear portion, a hole portion 58 and a hole portion 59 having a diameter smaller than that of the hole portion 58, which holes are adjacent to each other in the lateral direction and pass through the mounting portion 54 in the longitudinal direction.

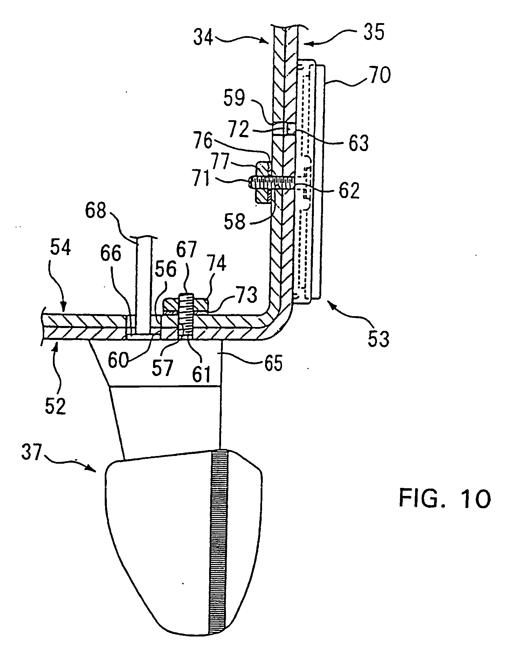

The mounting portion 52 of the rear fender 35 shown, for example, in FIG. 7 is fitted to the outer side of the mounting portion 54 of the rear fender 34. As shown in FIG. 10, the mounting portion 52 has a pair of left and right hole portions 60 having the same diameters as those of the hole portions 56 on the rear fender 34 side and also a pair of left and right portions 61 having the same diameters as those of the hole portions 57 on the rear fender 34 side. When the mounting portion 52 of the rear fender 35 is fitted to the mounting portion 54 of the rear fender 34, the hole portions 60 on the rear fender 35 side are disposed coaxially with the hole portions 56 on the rear fender 34 side and the hole portions 61 on the rear fender 35 side are disposed coaxially with the hole portions 57 on the rear fender 34 side. The mounting portion 52 of the rear fender 35 also has a hole portion 62 having the same diameter as that of the hole portion 58 on the rear fender 34 side, and also a hole portion 63 having the same diameter as that of the hole portion 59 on the rear fender 34 side. When the mounting portion 52 of the rear fender 35 is fitted to the mounting portion 54 of the rear fender 34, the hole portion 62 on the rear fender 35 side is disposed coaxially with the hole portion 58 on the rear fender 34 side, and the hole portion 63 on the rear fender 35 side is disposed coaxially with the hole portion 59 on the rear fender 34 side.

As shown in FIG. 8, each of the rear winkers 37 has a rear winker main body 65 having a light emission portion 64. A positioning/fitting portion 66 is provided on the front side of a side portion of the rear winker main body 65. The positioning/fitting portion 66 has a diameter slightly smaller than that of each of the large-diameter hole portion 56 of the rear fender 34 and the large-diameter hole portion 60 of the rear fender 35. A wiring line 68 is inserted in the positioning/fitting portion 66. A screw shaft portion 67 is provided on the rear winker main body 65 at a position behind the positioning/fitting portion 66. The screw shaft portion 67 has a diameter slightly smaller than that of each of the small-diameter hole portion 57 of the rear fender 34 and the small-diameter hole portion 61 of the rear fender 35.

As shown in FIG. 9, the rear reflector 53 has a plate-shaped rear reflector main body 70 having on its one side a reflecting portion 69, a screw shaft portion 71 projecting from a central portion of the rear reflector main body 70, and a positioning pin 72 provided adjacently to the screw shaft portion 71. The screw shaft portion 71 has a diameter slightly smaller than that of each of the hole portion 58 of the rear fender 34 and the hole portion 62 of the rear fender 35. The positioning pin 72 has a diameter slightly smaller than that of each of the hole portion 59 of the rear fender 34 and the hole portion 63 of the rear fender 35.

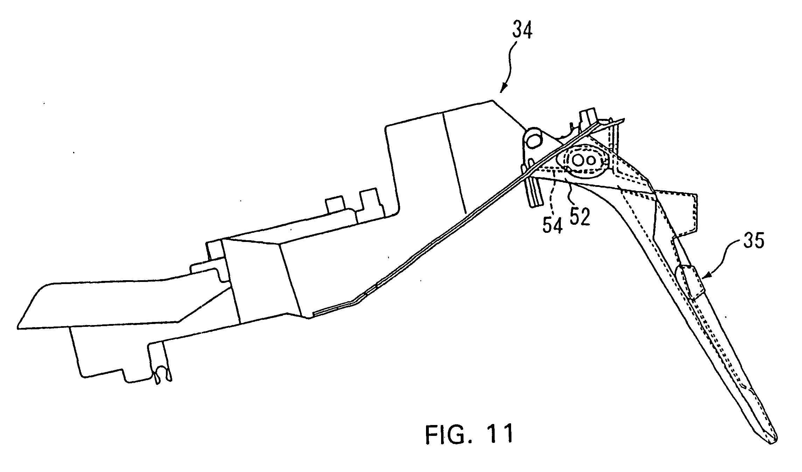

Each of the left and right rear winkers 37 is mounted to the rear fender 34 and the rear fender 35 as follows. First, as shown in FIG. 11, the mounting portion 52 of the rear fender 35 is fitted to the mounting portion 54 of the rear fender 34. In this state, as shown in FIG. 10, the positioning/fitting portion 66 of the rear winker 37 is fitted in the front side hole portion 60 of the rear fender 35 and at the same time the wiring line 68 extending from the inside of the positioning/fitting portion 66 is inserted in the hole portion 56 of the rear fender 34 and the hole portion 60 of the rear fender 35; the screw shaft portion 67 is inserted in the rear side hole portion 57 of the rear fender 34 and the rear side hole portion 61 of the rear fender 35; and a nut member 74 is screwed with a projecting leading end of the screw shaft portion 67 via a washer member 73, whereby the rear fender 34 and the rear fender 35 are clamped by means of the rear winker main body 65 and the nut member 74.

On the other hand, the screw shaft portion 71 of the rear reflector 53 is inserted in the hole portion 58 of the rear fender 34 and the hole portion 62 of the rear fender 35; the positioning pin 72 of the rear reflector 53 is fitted in the hole portion 63 of the rear fender 35; and a nut member 77 is screwed with a projecting leading end of the screw shaft portion 71 via a washer member 76, whereby the rear fender 34 and the rear fender 35 are clamped by means of the rear reflector main body 70 and the nut member 77.

In this way, the left and right rear winkers 37 and the rear reflector 53 are mounted to the rear fender 34 and the rear fender 35. At the same time, the rear fender 35 is mounted to the rear fender 34. To be more specific, the rear fender 35 extending downwardly from the rear end portion of the rear fender 34 is mounted to the rear fender 34 for covering the lower side of the rear cowl 13 by means of the left and right rear winkers 37 and the rear reflector 53.

In this embodiment, the diameter of the hole portion 56 of the rear fender 34 is the same as that of the hole portion 60, disposed coaxially with the hole portion 56, of the rear fender 35; the diameter of the hole portion 57 of the rear fender 34 is the same as that of the hole portion 61, disposed coaxially with the hole portion 57, of the rear fender 35; the diameter of the hole portion 58 of the rear fender 34 is the same as that of the hole portion 62, disposed coaxially with the hole portion 58, of the rear fender 35; and the hole portion 59 of the rear fender 34 is the same as that of the hole portion 63, disposed coaxially with the hole portion 59, of the rear fender 35. Accordingly, even if the rear fender 35 is not mounted to the rear fender 34, the left and right winkers 37 can be mounted via the hole portions 56 and 57 to the mounting portion 34 of the rear fender 34, and the rear reflector 53 can be mounted via the hole portions 58 and 59 to the rear fender 34, whereby the structure can be easily changed into a racing structure with no rear fender 35.

According to the tail lamp structure for the motorcycle 1 in this embodiment, as shown in FIG. 2, since the tail lamp portion 47 is disposed on the upper portion of the tail lamp structure and the brake lamp portion 48 is disposed under the tail lamp portion 47, even if the tail lamp structure is disposed inside the rear end portion of the rear cowl 13, which portion has a shape whose lateral width becomes narrow as nearing to the upper end of the rear cowl 13, the lighting area of the brake lamp portion 48 does not become small. As a result, it is possible to ensure a sufficient lighting area of the brake lamp portion 48.

As described above, according to the tail lamp structure for a motorcycle of the present invention, since a tail lamp portion is disposed on an upper portion of the tail lamp structure and a brake lamp portion is disposed under the tail lamp portion, even if the tail lamp structure is disposed inside the rear end portion of a rear cowl, which portion has a shape whose lateral width becomes narrow as nearing to the upper end of the rear cowl, the lighting area of the brake lamp portion does not become small. As a result, it is possible to ensure a sufficient lighting area of the brake lamp portion.

In summary it is an object to provide a tail lamp structure for a motorcycle, which is capable of sufficiently ensuring a lighting area of a brake lamp even if the tail lamp structure is disposed inside a rear end portion of a rear cowl, which portion has a shape whose lateral width becomes narrow as nearing to an upper end of the rear cowl.
To achieve this, a tail lamp unit 40 is disposed inside a rear end portion of a rear cowl 13, which portion has a shape whose lateral width becomes narrow as nearing to an upper end of the rear cowl 13. A tail lamp 47 is disposed on an upper portion of the tail lamp structure and a brake lamp 48 is disposed under the tail lamp 47, whereby a sufficient lighting area of the brake lamp can be ensured.

## Claims

1. A tail lamp structure (40) for a motorcycle (1), which is disposed inside a rear end portion of a rear cowl (13), said rear end portion having a shape whose lateral width becomes narrow as nearing to an upper end of said rear cowl (13),
**characterized in that**
a tail lamp (47) is disposed on an upper portion of said tail lamp structure (40), and a brake lamp (48) is disposed under said tail lamp(47), wherein one row of a plurality of LEDs (50) is arrayed on the lateral direction in said tail lamp (47), and a plurality of vertical rows each having a plurality of LEDs (51) are arrayed on the lateral direction in said brake lamp (48).

2. A tail lamp structure (40) for a motorcycle (1) according to claim 1, wherein the number of LEDs which are arranged in an upper row of said brake lamp (48) is larger than the number of LEDs which are arranged in a lower row of said brake lamp (48).

## Patentansprüche

1. Rücklichtstruktur (40) für ein Motorrad (1), welche in einem hinteren Endabschnitt einer hinteren Verkleidung (13) angeordnet ist, wobei der hintere Endabschnitt eine Gestalt aufweist, deren seitliche Breite bei Annäherung an ein oberes Ende der hinteren Verkleidung (13) schmal wird, **dadurch gekennzeichnet, daß**
ein Rücklicht (47) an einem oberen Abschnitt der Rücklichtstruktur (40) angeordnet ist und ein Bremslicht (48) unter dem Rücklicht (47) angeordnet ist, wobei eine Reihe einer Vielzahl von LED's 50 in der seitlichen Richtung in dem Rücklicht (47) angeordnet ist und eine Vielzahl vertikaler Reihen, welche jeweils eine Vielzahl von LED's 51 aufweisen, in der seitlichen Richtung in dem Bremslicht (48) angeordnet ist.

2. Rücklichtstruktur (40) für ein Motorrad (1) nach Anspruch 1, wobei die Anzahl der LED's, welche in einer oberen Reihe des Bremslichts (48) angeordnet sind, größer als die Anzahl der LED's, welche in einer unteren Reihe des Bremslichts (48) angeordnet sind, ist.

## Revendications

1. Structure de feu arrière (40) d'un motocycle (1), qui est disposée à l'intérieur d'une partie arrière d'un auvent arrière (13), ladite partie d'extrémité arrière présentant une forme dont la largeur latérale se rétrécit à mesure qu'elle s'approche d'une extrémité supérieure dudit auvent arrière (13), **caractérisée en ce que**
un feu arrière (47) est disposé sur une partie supérieure de ladite structure de feu arrière (40), et un feu de stop (48) est disposé sous ledit feu arrière (47), dans laquelle une rangée d'une pluralité de DEL (50) est agencée dans la direction latérale dans ledit feu arrière (47), et une pluralité de rangées verticales présentant chacune une pluralité de DEL (51) sont agencées dans la direction latérale dans ledit feu de stop (48).

2. Structure de feu arrière (40) pour un motocycle (1) selon la revendication 1, dans laquelle le nombre de DEL qui sont agencées dans une rangée supérieure dudit feu de stop (48) est supérieur au nombre de DEL qui sont agencées dans une rangée inférieure dudit feu de stop (48).
